# FASCICULE DE BREVET EUROPEEN

(11) **EP 1 350 875 B1**
(45) Date de publication et mention de la délivrance du brevet: **19.08.2009**
(21) Numéro de dépôt: 03356036.8
(22) Date de dépôt: 27.02.2003
(51) Int. Cl.: D03C 1/14, F16C 7/00

(54) **Mécanisme de tirage, son procédé de fabrication et métier à tisser comprenant un tel mécanisme**
Zugvorrichtung, Verfahren zu ihrer Herstellung und Webmaschine mit einer solchen Vorrichtung
Traction device, method of manufacturing the device and weaving machine with such a device

(30) Priorité: 28.02.2002 FR 0202576
(43) Date de publication de la demande: 08.10.2003
(73) Titulaire: STÄUBLI FAVERGES, 74210 Faverges (FR)
(72) Inventeur: Fumex, André, 74290 Talloires (FR)
(74) Mandataire: Myon, Gérard Jean-Pierre

(56) Documents cités:
- EP-A- 0 574 081
- FR-A- 2 579 937
- FR-A- 2 676 467
- FR-A- 2 776 307

## Description

L'invention a trait à un mécanisme de tirage associé à une ratière ou à une autre mécanique d'armure pour la formation de la foule sur un métier à tisser. L'invention a également trait à un procédé de fabrication d'un tel mécanisme et à un métier à tisser comprenant un tel mécanisme.

Dans le domaine des ratières, on connaît des mécanismes de tirage comprenant des bielles qui assurent l'accouplement des organes mobiles d'actionnement avec les cadres de lisse à déplacement vertical monté sur le métier. Dans les dispositifs classiques, les embouts de bielles ne sont pas démontables. Des flasques sont créés aux extrémités des bielles par découpage, ce qui a pour effet d'affaiblir mécaniquement ces bielles. Par FR-A-2 676 467, on connaît un mécanisme de tirage résolvant une partie de ces problèmes, dans lequel une bielle tubulaire à section aplatie est pourvue d'un embout comprenant deux flasques prévus pour être disposés de part et d'autre d'un levier oscillant. Les deux dispositifs décrits dans ce document incluent des pièces relativement complexes prévues pour être insérées dans l'extrémité d'une bielle, ces pièces étant en pratique difficiles à industrialiser à un coût acceptable. Par ailleurs, FR-A-2 776 307 décrit un autre mécanisme de tirage dans lequel deux axes sensiblement parallèles sont immobilisés à l'intérieur d'une bielle par adhérence, ces deux axes étant maintenus écartés l'un par rapport à l'autre grâce à des vis.

L'augmentation des vitesses de fonctionnement des mécanismes de tirage est telle que les éléments constitutifs de ces mécanismes sont soumis à des accélérations importantes, notamment lors des inversions de mouvement, ce qui impose d'exercer des efforts intenses de blocage par l'utilisation de vis de plus en plus nombreuses. Ceci nuit à la rapidité de manoeuvre de ces dispositifs et à leur prix de revient, alors que les interventions de maintenance sur ces dispositifs sont de plus en plus complexes.

C'est à ces inconvénients qu'entend plus particulièrement remédier l'invention en proposant un mécanisme de tirage dans lequel on obtient une immobilisation relative ferme des parties constitutives de ce dispositif, sans avoir recours à un trop grand nombre de vis.

Dans cet esprit, l'invention concerne un mécanisme de tirage interposé entre une mécanique d'armure et des cadres de lisse d'un métier à tisser, ce mécanisme comprenant au moins une bielle tubulaire à section aplatie qui, pour son attelage à au moins un levier oscillant de liaison, est pourvue d'au moins un embout comprenant deux flasques, prévus pour être disposés de part et d'autre de ce levier en étant articulés sur celui-ci, et au moins une partie apte à pénétrer et à être immobilisée dans cette bielle. Ce mécanisme est caractérisé en ce que l'extrémité de la bielle est pourvue, sur sa surface interne, de reliefs aptes à coopérer avec des surfaces d'appui prévues sur la partie de l'embout destinée à pénétrer dans cette extrémité en vue de l'immobilisation de cette partie dans cette extrémité.

Grâce à l'invention, les reliefs prévus sur l'extrémité de la bielle permettent une immobilisation ferme de la partie pénétrant dans cette extrémité, ce qui est compatible avec les vitesses de fonctionnement actuelles et futures des ratières. L'invention prend le contre-pied d'un préjugé de l'homme du métier qui a tendance à considérer qu'il n'est pas possible de réaliser des reliefs transversaux dans une bielle tubulaire généralement obtenue par étirage ou filage, dans la mesure où un usinage transversal du tube poserait un problème d'accessibilité et induirait par ailleurs un retrait de matière et un affaiblissement de la bielle. La partie pénétrant dans l'extrémité de la bielle peut être grandement simplifiée, ce qui permet de rendre plus fiable et plus économique le mécanisme conforme à l'invention.

L'invention concerne également un procédé de fabrication d'un mécanisme tel que précédemment décrit et, plus spécifiquement, un mécanisme qui comprend une étape consistant à réaliser les reliefs prévus sur la bielle par emboutissage localisé de celle-ci. Un emboutissage localisé est particulièrement économique et permet de créer des reliefs suffisants pour bloquer efficacement la partie introduite dans la bielle.

L'invention concerne enfin un métier à tisser qui comprend un mécanisme de tissage conforme à l'invention.

L'invention sera mieux comprise et d'autres avantages de celle-ci apparaîtront plus clairement à la lumière de la description qui va suivre d'un mode de réalisation d'un mécanisme de tirage conforme à son principe, donné uniquement à titre d'exemple et fait en référence aux dessins annexés dans lesquels :
- La figure 1 est une représentation schématique de principe d'un métier à tisser conforme à l'invention ;
- La figure 2 est une coupe, à plus grande échelle, d'une zone de couplage entre une bielle et un levier oscillant dans le métier de la figure 1 et
- La figure 3 est une vue en perspective éclatée, avec arrachement partiel, des éléments représentés à la figure 2.

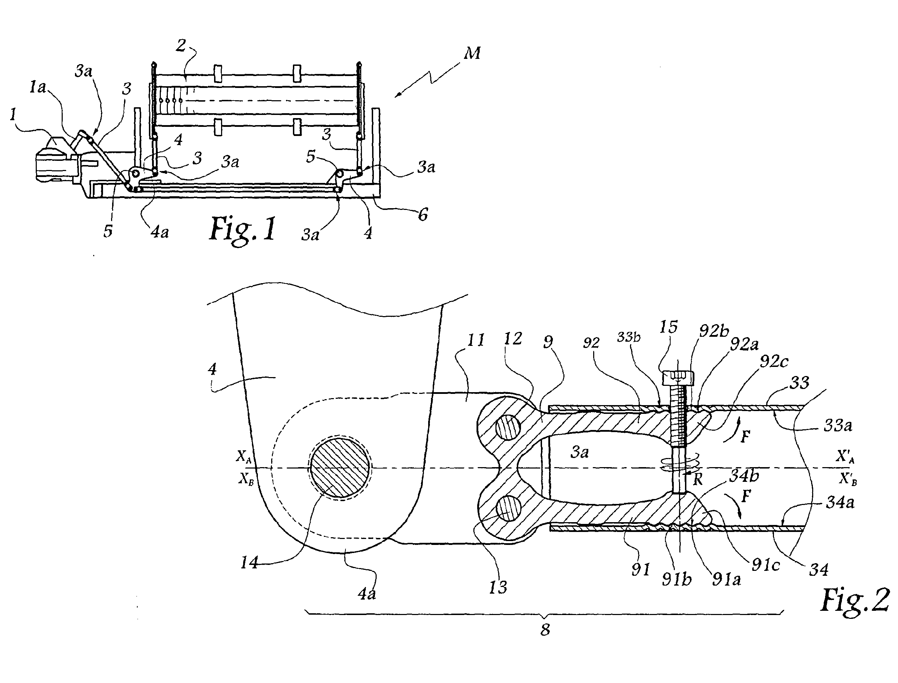

A la figure 1, une ratière 1 est destinée à entraîner un cadre de lisse 2 d'un métier à tisser M dans un mouvement vertical oscillant. Pour ce faire, un bras d'actionnement 1a de la ratière 1 est attelé, par une série de bielles 3 orientées obliquement, horizontalement ou verticalement, à deux leviers oscillants 4 montés de part et d'autre du métier et articulés autour d'axes 5 fixes par rapport au bâti 6 du métier.

Il est prévu autant de bras 1a et d'ensembles de bielles 3 et de leviers 4 que de cadres de lisses à entraîner sur le métier M.

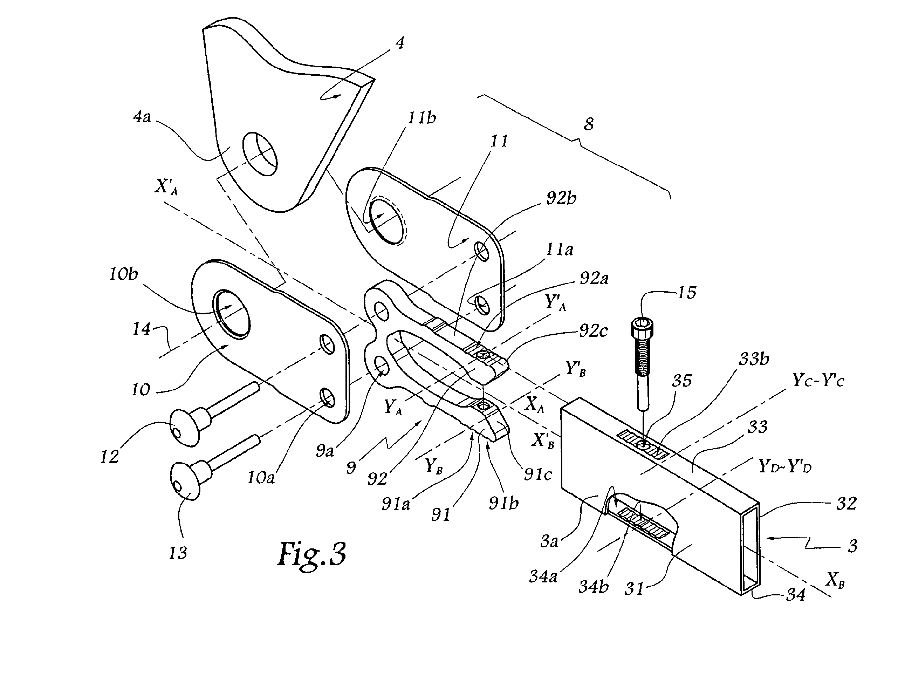

Comme il ressort plus particulièrement des figures 2 et 3, chaque bielle 3 est prévue sous la forme d'un tube à section rectangulaire aplatie. On note 3a l'extrémité de la bielle visible aux figures 2 à 4 et qui est destinée à être attelée à une queue 4a d'un levier 4. Un embout 8 est prévu pour l'attelage des éléments 3a et 4a. Cet embout est essentiellement constitué d'une pince 9 élastique à section globalement en forme de U et deux flasques 10 et 11 destinés à être montés sur la pince 9 grâce à des rivets 12 et 13 traversant des perçages 9a, 10a et 11a respectivement prévus sur les éléments 9 à 11.

Les flasques 10 et 11 sont également chacun pourvus d'un orifice 10b, 11b de passage d'un axe 14 d'articulation de la queue 4a entre les flasques 10 et 11.

La pince 9 est prévue pour être insérée dans l'extrémité 3a de la bielle 3 en étant immobilisée à l'intérieur de celle-ci. Pour ce faire, la pince 9 a une section dans le plan de la figure 2 globalement en forme de U et chacune des branches 91 et 92 de la pince 9 est pourvue d'une surface externe 91a, respectivement 92a, sur laquelle sont ménagées des dents en forme de vagues 91b, 92b qui s'étendent chacune globalement selon une direction Y_{A}-Y_{A}' ou Y_{B}-Y'_{B} perpendiculaire à la direction longitudinale X_{A}-X'_{A} de la pince 9.

On note respectivement 31 et 32 les grands côtés de la bielle 3. On note par ailleurs 33 le côté supérieur et 34 le côté inférieur de la bielle 3.

Dans sa partie contre laquelle est prévue pour venir en regard la surface 91a et sur sa surface interne 34a, le côté 34 est pourvu de dents 34b en forme de vagues qui s'étendent selon une direction Y_{c}-Y'_{c}, globalement perpendiculaire à la direction longitudinale X_{B}-X'_{B} de la bielle 3.

En configuration montée du mécanisme, les directions X_{A}-X'_{A} et X_{B}-X'_{B} sont confondues.

Par ailleurs, il est prévu dans le côté 33 un orifice 35 de passage d'une vis 15 de réglage de l'écartement relatif des extrémités 91c et 92c des branches 91 et 92.

De part et d'autre de l'orifice 35, le côté 33 est pourvu de dents 33b, globalement parallèles aux dents 34b, s'étendant selon une direction Y_{D}-Y'_{D} globalement perpendiculaire à l'axe X_{B}-X'_{B} et faisant saillie en direction de l'axe X_{B}-X'_{B} à partir de la surface interne 33a du côté 33.

La géométrie des dents 91b et 34b, d'une part, 92b et 33b, d'autre part, est prévue pour que leur mise en prise s'oppose efficacement à un glissement relatif des éléments 3 et 9 selon les directions X_{A}-X'_{A} et X_{B}-X'_{B}.

Ainsi, et comme il ressort plus particulièrement de la figure 2, lorsque la pince 9 est en place dans l'extrémité 3a de la bielle 3, on peut, par un mouvement de vissage de la vis 15 représenté par la flèche R à la figure 2, écarter les extrémités 91c et 92c comme représenté par les flèches F, de telle sorte que les reliefs constitués par les dents 91b et 92b viennent respectivement en prise avec les reliefs constitués par les dents 33b et 34b, ce qui immobilise fermement la pince 9, c'est-à-dire l'embout 8, par rapport à la bielle 3. On peut se contenter d'une unique vis 15 pour assurer le blocage de l'embout 8 par rapport à la bielle 3, ce qui est fiable, économique et de nature à faciliter le montage et la maintenance.

Les dents 33b et 34b sont formées par emboutissage localisé de la bielle 3 qui peut être fabriquée de façon particulièrement économique par filage ou étirage, à chaud ou à froid.

L'invention a été représentée avec une bielle à section rectangulaire. Elle s'applique également à une bielle de forme aplatie dont les petits côtés sont arrondis et, plus généralement, à toute forme de bielle compatible avec l'invention.

## Revendications

1. Mécanisme de tirage interposé entre une mécanique d'armure et des cadres de lisses (2) d'un métier à tisser (M), ledit mécanisme comprenant au moins une bielle tubulaire (3) à section aplatie qui, pour son attelage à au moins un levier oscillant de liaison (4), est pourvue d'au moins un embout (8) comprenant deux flasques (10, 11), prévus pour être disposés de part et d'autre dudit levier en étant articulés sur celui-ci, et au moins une partie (9) apte à pénétrer et à être immobilisée dans une extrémité (3a) de ladite bielle, **caractérisé en ce que** ladite extrémité de bielle (3a) est pourvue, sur sa surface interne (33a, 34a), de reliefs (33b, 34b) aptes à coopérer avec des surfaces d'appui (91a, 92a) prévues sur ladite partie (9) pour l'immobilisation de ladite partie dans ladite extrémité.

2. Mécanisme selon la revendication 1, **caractérisé en ce que** lesdits reliefs sont formés par des dents (33b, 34b) s'étendant selon des directions (Y_{C}-Y'_{C} , Y_{D}-Y'_{D}) globalement perpendiculaires à un axe longitudinal (X_{B}- X'_{B}) de ladite bielle (3).

3. Mécanisme selon l'une quelconque des revendications précédentes, **caractérisé en ce que** ladite bielle (3) est à section globalement rectangulaire et **en ce que** lesdits reliefs (33b, 34b) sont formés sur au moins un petit côté (33, 34) de ladite section.

4. Mécanisme selon l'une des revendications précédentes, **caractérisé en ce que** lesdits reliefs (33b, 34b) sont ménagés sur deux faces en regard (33, 34) de la section transversale de ladite bielle (3).

5. Mécanisme selon l'une des revendications précédentes, **caractérisé en ce que** ladite partie apte à pénétrer dans l'extrémité (3a) de la bielle (3) est constituée par une pince (9) élastiquement déformable ayant une section globalement en forme de U, avec des perçages (9a) de passage de moyens (12, 13) de fixation desdits flasques.

6. Mécanisme selon la revendication 5, **caractérisé en ce que** ladite pince (9) est pourvue, au niveau de surfaces (91a, 92a) d'appui contre ladite bielle (3), de reliefs (91b, 92b) aptes à coopérer avec les reliefs (33b, 34b) prévus sur ladite extrémité (3a) de bielle.

7. Mécanisme selon la revendication 6, **caractérisé en ce que** lesdites surfaces d'appui (91a, 92a) sont prévues au niveau des extrémités (91c, 92c) des branches (91, 92) dudit U, sur l'extérieur de celles-ci.

8. Procédé de fabrication d'un mécanisme de tirage selon l'une des revendications précédentes, **caractérisé en ce qu'**il comprend une étape consistant à réaliser lesdits reliefs (33b, 34b) par emboutissage localisé de ladite bielle.

9. Procédé selon la revendication 8, **caractérisé en ce qu'**il comprend une étape préalable de fabrication de ladite bielle (3) par filage ou étirage.

10. Métier à tisser comprenant un mécanisme de tirage (3-15) selon l'une des revendications 1 à 7.

## Claims

1. Traction device interposed between a fastening mechanism and the heald frames (2) of a weaving machine (M), this device comprising at least one tubular rod (3) with a flattened section, which for its attachment to at least one oscillating linking lever (4) is provided with at least one fitting (8) comprising two flanges (10, 11), which are provided to be arranged on either side of this lever and are connected to it, and at least one part (9), which is suitable for penetrating and being immobilised in one end (3a) of this rod, **characterised in that** on its internal surface (33a, 34a) this end of the rod (3a) is provided with reliefs (33b, 34b), which are suitable for cooperating with the support surfaces (91a, 92a) provided on this part (9) for the immobilisation of this part in this end.

2. Device according to claim 1, **characterised in that** these reliefs are formed by teeth (33b, 34b) extending in directions (Y_{C}-Y'_{C}, Y_{D}-Y'_{D}) generally perpendicular to a longitudinal axis (X_{B}-X'_{B}) of this rod (3).

3. Device according to any one of the previous claims, **characterised in that** this rod (3) has a generally rectangular section and that these reliefs (33b, 34b) are formed on at least one small side (33, 34) of this section.

4. Device according to one of the previous claims, **characterised in that** these reliefs (33b, 34b) are provided on two facing faces (33, 34) of the transverse section of this rod (3).

5. Device according to one of the previous claims, **characterised in that** this part, which is suitable for penetrating into the end (3a) of the rod (3), is made up of an elastically deformable clip (9) with a generally U shaped section with holes (9a) for passing means (12, 13) of fixing these flanges.

6. Device according to claim 5, **characterised in that** on the surfaces (91a, 92a) for support against this rod (3) this clip (9) is provided with reliefs (91b, 92b), which are suitable for cooperating with the reliefs (33b, 34b) provided on this end (3a) of the rod.

7. Device according to claim 6, **characterised in that** these support surfaces (91a, 92a) are provided on the ends (91c, 92c) of the branches (91, 92) of this U on their outside.

8. Method of manufacturing a traction device according to one of the previous claims, **characterised in that** it comprises a stage consisting of making these reliefs (33b, 34b) by localised embossing of this rod.

9. Method according to claim 8, **characterised in that** it comprises a preliminary stage for manufacturing this rod (3) by drawing or stretching.

10. Weaving machine comprising a traction device (3-15) according to one of claims 1 to 7.

## Patentansprüche

1. Zugvorrichtung, die zwischen einer Schaftmaschine und Schaftrahmen (2) einer Webmaschine (M) angeordnet ist, wobei die Vorrichtung mindestens eine rohrförmige Pleuelstange (3) mit abgeflachtem Querschnitt, die für ihre Ankopplung an mindestens einen Verbindungsschwinghebel (4) an mindestens einem Ansatzstück (8) versehen ist, das zwei Flansche (10, 11) aufweist, die vorgesehen sind, beidseitig des Hebels angeordnet zu werden, wobei sie an diesem angelenkt sind, und mindestens ein Teil (9) umfasst, das geeignet ist, in ein Ende (3a) der Pleuelstange einzugreifen und festgelegt zu werden, **dadurch gekennzeichnet, dass** das Ende der Pleuelstange (3a) an ihrer Innenfläche (33a, 34a) mit Reliefs (33b, 34b) versehen ist, die geeignet sind, mit an dem Teil (9) vorgesehenen Auflageflächen (91a, 92a) für die Festlegung des Teils in dem Ende zusammenzuarbeiten.

2. Vorrichtung nach Anspruch 1, **dadurch gekennzeichnet, dass** die Reliefs durch Zähne (33b, 34b) gebildet sind, die sich gemäß im Wesentlichen senkrecht zu einer Längsachse (X_{B} - X'_{B}) der Pleuelstange (3) liegenden Richtungen (Y_{C} - Y'_{C}, Y_{D} - Y'_{D}) erstrecken.

3. Vorrichtung nach einem beliebigen der vorhergehenden Ansprüche, **dadurch gekennzeichnet, dass** die Pleuelstange (3) einen im Wesentlichen rechteckförmigen Querschnitt aufweist und dass die Reliefs (33b, 34b) auf mindestens einer kleinen Seite (33, 34) des Querschnitts ausgebildet sind.

4. Vorrichtung nach einem der vorhergehenden Ansprüche, **dadurch gekennzeichnet, dass** die Reliefs (33b, 34b) an zwei gegenüberliegenden Flächen (33, 34) des Querschnitts der Pleuelstange (3) ausgebildet sind.

5. Vorrichtung nach einem der vorhergehenden Ansprüche, **dadurch gekennzeichnet, dass** das Teil, das geeignet ist, in das Ende (3a) der Pleuelstange (3) einzugreifen, durch eine Klemme (9) gebildet wird, die elastisch verformbar ist und einen im Wesentlichen U-förmigen Schnitt mit Bohrungen (9a) für den Durchgang von Befestigungsmitteln (12, 13) für die Flansche aufweist.

6. Vorrichtung nach Anspruch 5, **dadurch gekennzeichnet, dass** die Klemme (9) an ihren Auflageflächen (91a, 92a) gegen die Pleuelstange (3) mit Reliefs (91b, 92b) versehen ist, die mit den an dem Ende (3a) der Pleuelstange vorgesehenen Reliefs (33b, 34b) zusammenarbeiten können.

7. Vorrichtung nach Anspruch 6, **dadurch gekennzeichnet, dass** die Auflagenflächen (91a, 92a) an den Enden (91c, 92c) der Arme (91, 92) des U und dort außen vorgesehen sind.

8. Verfahren zum Herstellen einer Zugvorrichtung nach einem der vorhergehenden Ansprüche, **dadurch gekennzeichnet, dass** es einen Schritt umfasst, der darin besteht, die Reliefs (33b, 34b) durch örtliches Tiefziehen der Pleuelstange herzustellen.

9. Verfahren nach Anspruch 8, **dadurch gekennzeichnet, dass** es einen Herstellungsvorschritt für die Pleuelstange (3) durch Strangpressen oder Streckziehen umfasst.

10. Webmaschine mit einer Ziehvorrichtung (3 - 15) nach einem der Ansprüche 1 bis 7.
